# FASCICULE DE BREVET EUROPEEN

(11) **EP 0 708 227 B1**
(45) Date de publication et mention de la délivrance du brevet: **18.11.1998**
(21) Numéro de dépôt: 95402066.5
(22) Date de dépôt: 13.09.1995
(51) Int. Cl.: F01D 5/20, F01D 5/28, F16J 15/32

(54) **Aube de turbomachine en matériau composite munie d'un joint d'étanchéité et son procédé de réalisation**
Faserverstärkte Turbomaschinenschaufel mit integrierter Bürstendichtung und deren Herstellungsweise
Composite turbomachine blade with integrated brush seal and manufacturing method therefor

(30) Priorité: 14.09.1994 FR 9410949
(43) Date de publication de la demande: 24.04.1996
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Thore, Monique André, F-91560 Crosne (FR); Vasseur, Pascal Claude Michel Adrien, F-77000 Vaux le Penil (FR)

(56) Documents cités:
- FR-A- 379 209
- FR-A- 2 252 516
- GB-A- 775 816
- US-A- 3 117 716
- US-A- 4 354 804
- US-A- 5 114 159
- PATENT ABSTRACTS OF JAPAN vol. 001 no. 137 (M-046) ,11 Novembre 1977 & JP-A-52 077908 (MITSUBISHI HEAVY IND LTD) 30 Juin 1977,

## Description

### Domaine technique

L'invention a pour objet une aube de turbomachine en matériau composite comportant un joint brosse à son extrémité libre ainsi que son procédé de réalisation.

L'invention trouve une application dans le domaine de l'aéronautique.

### Etat de la technique

Pour assurer des performances maximales dans les turbomachines aéronautiques, il est indispensable de limiter au maximum les fuites de gaz entre les éléments fixes et les éléments rotatifs de ces turbomachines. Il faut donc limiter, plus précisément, les fuites de gaz dans la soufflante, le compresseur basse pression ainsi que dans le compresseur haute pression de cette turbomachine.

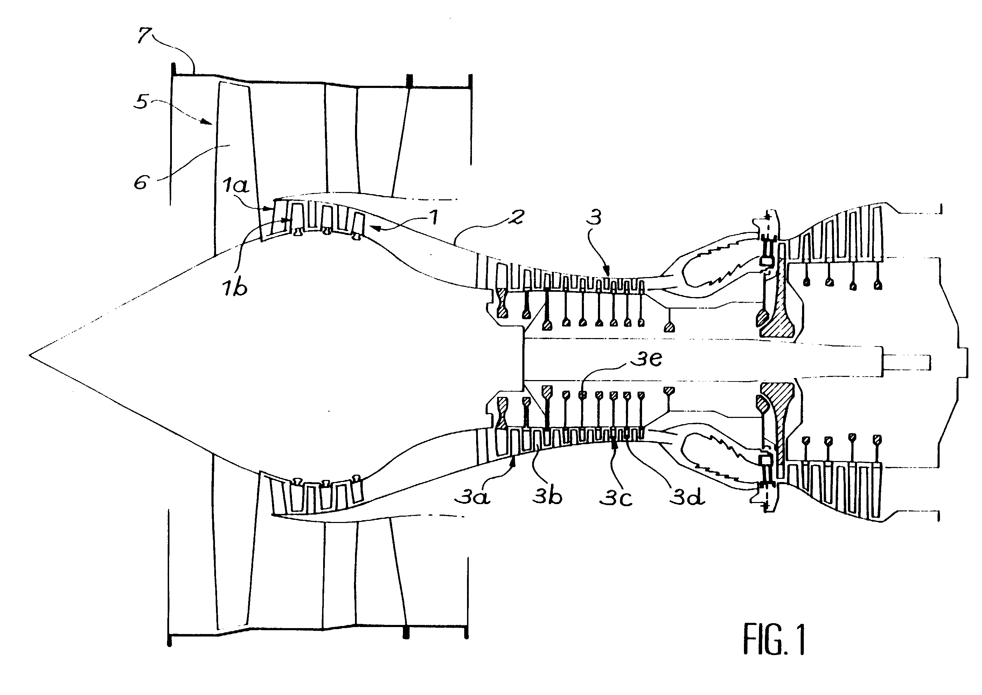

Sur la figure 1, on a représenté schématiquement une turbomachine de moteur d'avion comportant, classiquement, un compresseur basse pression référencé 1, un compresseur haute pression référencé 3, et une soufflante, référencée 5. Le compresseur haute pression 3 comporte une partie fixe, à savoir le stator 3a dont les aubes 3b sont maintenues par leurs extrémités fixes sur le carter 2 ; il comporte en outre une partie rotative à savoir le rotor 3c dont les aubes 3d sont fixées par leurs extrémités fixes aux disques rotatifs 3c. De même, le compresseur basse pression 1 comporte un stator la fixe et un rotor 1b rotatif. En outre, la soufflante 5 comporte une aube 6 rotative et une partie fixe, le carter 7.

Aussi, pour améliorer les performances de ces turbomachines, on cherche à limiter les fuites de gaz entre les divers éléments rotatifs, et les éléments fixes au moyen de joints d'étanchéité.

Par exemple, pour les compresseurs basse et haute pression 1 et 3, on cherche généralement à limiter les fuites de gaz entre le stator et le rotor. Pour la soufflante 5, on cherche à limiter les fuites de gaz entre l'aube 6 et le carter 7.

Actuellement, plusieurs types de joints d'étanchéité sont connus de l'homme de l'art.

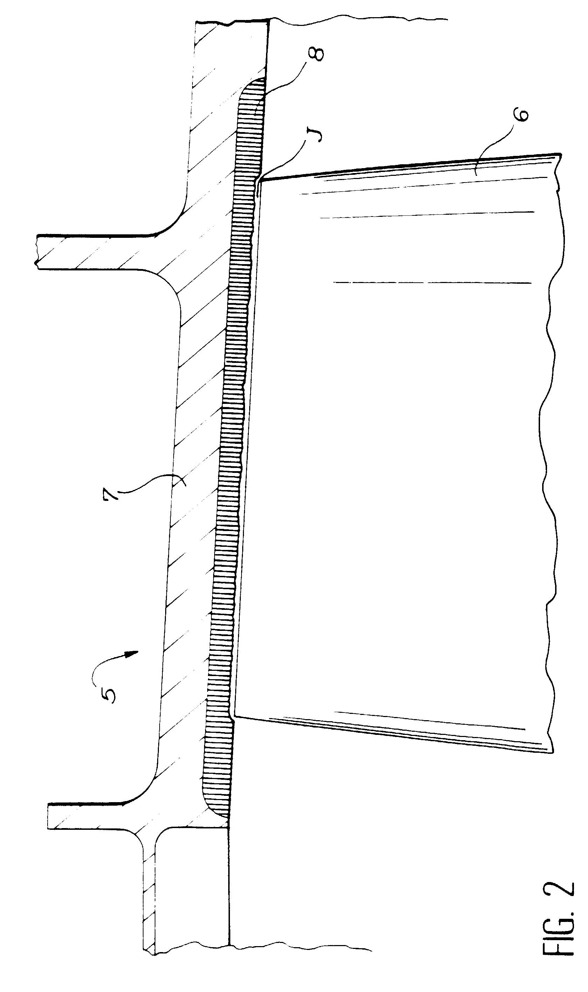

L'un de ces joints d'étanchéité est réalisé en un matériau abradable, c'est-à-dire un matériau à structures alvéolaires, du type nid d'abeille, qui est positionné sur les éléments fixes de la turbomachine (sur les carters ou les stators) au droit des éléments tournants (rotor ou aube). On a justement représenté, sur la figure 2, l'un de ces joints d'étanchéité réalisés en un matériau abradable.

Sur cette figure 2, on a représenté, selon une coupe longitudinale, un joint d'étanchéité de ce type appliqué à une soufflante. Cette figure 2 montre donc, de façon schématisée, une portion de soufflante 5 comportant un carter 7 et une aube rotative 6. Dans le carter 7, est logé un joint d'étanchéité 8 situé au droit de l'aube 6. Ce joint d'étanchéité 8 est réalisé en un matériau abradable du type nid d'abeille.

Or, sous l'action des forces centrifuges et axiales exercées sur l'aube 6 et du fait de la dilatation des matériaux en fonction de la température ambiante, des frottements de l'aube 6 sur le joint d'étanchéité abradable 8, peuvent détériorer ce joint 8, du fait même de la constitution relativement fragile de ce matériau abradable. Aussi, lorsque la vitesse de rotation de l'aube 6 est réduite, les forces et la température diminuent inévitablement, ce qui entraîne entre les éléments fixes, (à savoir le carter 7, sur la figure 2), et les éléments rotatifs, (à savoir l'aube 6), un débit de fuite dans la zone détériorée du joint d'étanchéité 8. Cette zone détériorée constitue alors un jeu, référencé J, entre le carter 7 et l'aube 6.

Un autre type de joint d'étanchéité en matériau abradable est décrit dans le document FR-A-2 660 371. Ce document concerne un arrangement d'étanchéité disposé entre les étages des aubes de rotors. Cet arrangement d'étanchéité est réalisé en un matériau en nid d'abeille.

Des joints d'étanchéité en matériaux abradables sont également décrits dans les documents FR-A-2 563 571, US-A-4 227 703 et FR-1 2 481 740. Ces documents décrivent en effet des joints d'étanchéité fixés sur les éléments rotatifs des turbomachines. Selon ces documents, les aubes des compresseurs ou de la soufflante sont recouvertes sur leurs extrémités libres d'un revêtement abrasif. De tels joints d'étanchéité ont des inconvénients semblables à ceux énoncés pour le cas de la figure 2, à savoir que ces joints peuvent être facilement détériorés, du fait même de leur constitution, en cas de frottement des joints sur les éléments fixes des turbomachines.

L'utilisation de joints brosses comme joints d'étanchéité est également connue pour limiter les fuites de gaz dans les turbomachines. Le document FR-A-379 209, par exemple, décrit différents étages de turbines comportant des aubes mobiles à l'extrémité libre de chacune desquelles est rajoutée une bague munie d'un joint brosse. Cependant, un tel joint brosse est simplement rapporté sur l'extrémité libre de l'aube. Aussi, lors de changements brusques du régime moteur ou bien en cas de contact brutal avec la partie fixe, le joint brosse peut s'arracher de cette aube. Le joint brosse alors en liberté dans la turbomachine peut, bien évidemment, créer de fâcheux dégâts.

De nombreux autres documents, tels que le FR-A-2 477 226, le document EP-A-0 169 384 et le document FR-A-2 691 749 décrivent des étanchéités par joints brosses rapportés sur des rotors. Les inconvénients de ces joints brosses sont sensiblement identiques à ceux du joint brosse du FR-A-379 209.

Par ailleurs, FR-A-2 682 992 décrit un procédé de fabrication d'aubage de turbomachine en matériau composite dans lequel :
- on dispose des fibres par couches dans un moule,
- on effectue une injection d'un produit élastomérique dans le moule jusqu'à imprégnation des couches,
- on termine par une opération de polymérisation du produit.

### Exposé de l'invention

La présente invention a justement pour but de remédier aux inconvénients des joints d'étanchéité proposés ci-dessus.

A cette fin, elle propose une aube de turbomachine réalisée en matériau composite et comportant un joint brosse intégré.

De façon plus précise, l'invention concerne une aube de turbomachine en matériau composite réalisée au moyen d'un tissu de fibres multidirectionnelles imprégné d'une résine et comprenant un corps d'aube ayant une extrémité fixe et une extrémité libre. Cette aube de turbomachine se caractérise par le fait qu'elle comporte, à l'extrémité libre du corps d'aube, un joint d'étanchéité intégré dans la résine.

Avantageusement, le joint d'étanchéité comprend une pluralité de fibres spécifiques qui sont en partie intégrées dans la résine et en partie extérieures au corps d'aube pour former une brosse.

Selon l'invention, les fibres spécifiques sont intégrées dans la résine avec un angle a opposé au sens de rotation de la turbomachine.

Selon un mode de réalisation de l'invention, aux environs de l'extrémité libre du corps d'aube, une portion du tissu de fibres n'est pas recouverte de résine, de façon à former, avec les fibres spécifiques, une brosse plus dense.

Selon un mode de réalisation de l'invention, les fibres spécifiques sont métalliques.

L'invention concerne en outre un procédé de réalisation d'une telle aube de turbomachine en matériau composite munie d'un joint d'étanchéité, modifiant le procédé antérieur de fabrication d'un aubage en matériau composite connu par FR-A-2 682 992. Ce procédé se caractérise par le fait qu'il consiste à :
- introduire dans un moule, un tissu de fibre ;
- introduire dans le moule, aux environs de l'extrémité libre de l'aube, des fibres spécifiques ;
- injecter une résine dans ce moule ;
- effectuer une polymérisation sous presse chauffante du tissu de fibres imbibé de résine, et
- dissoudre, par attaque chimique dans un bain acide, de la résine pour obtenir une longueur de brosse choisie, à l'extrémité libre de l'aube, au niveau desdites fibres spécifiques.

Avantageusement, ce procédé peut comporter une opération d'usinage pour ajuster la longueur des fibres.

### Brève description des dessins

- La figure 1, déjà décrite, représente schématiquement une vue générale d'une tubormachine de moteur d'avion ;
- la figure 2, déjà décrite, représente schématiquement un joint d'étanchéité abradable selon l'art antérieur ;
- les figures 3A, 3B et 3C représentent chacune un mode de réalisation d'une aube munie d'un joint brosse intégré ;
- la figure 4 représente une vue de face d'un joint brosse selon l'invention montrant l'alimentation du joint par rapport à l'élément fixe ;
- la figure 5 représente, schématiquement, un mode de réalisation d'un joint brosse selon l'invention.

### Exposé détaillé de modes de réalisations de l'invention

Les aubes selon l'invention sont réalisées en matériau composite, c'est-à-dire qu'elles sont réalisées au moyen de fibres tissées et imprégnées d'une résine. De nombreux documents décrivent des procédés de réalisation d'aubes en matériau composite, par exemple, le brevet FR-A-2 684 719, le brevet FR-A-2 682 992, ou encore le brevet US-A-4 354 804.

Les matériaux composites ayant l'avantage d'être thermiquement résistants, les aubes en matériau composite peuvent donc être utilisées dans les zones relativement froides des turbomachines, tels que les compresseurs.

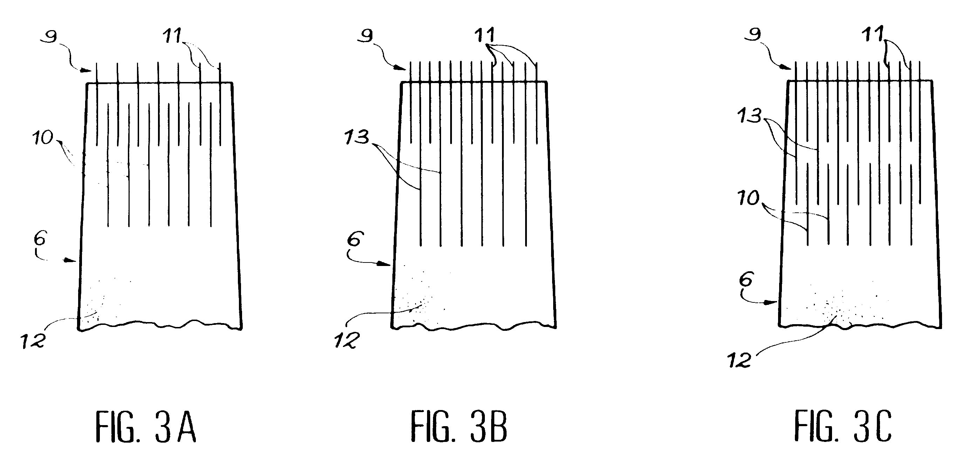

Sur les figures 3A, 3B et 3C, on a représenté de façon très schématique, une vue en coupe longitudinale de l'extrémité libre de trois aubes comportant chacune un joint brosse réalisé selon un mode de réalisation différent de l'invention.

Sur la figure 3A, on a représenté l'extrémité libre de l'aube 6 de la soufflante 5 montrée sur la figure 1. Cette aube 6 réalisée en matériau composite est donc constituée d'un tissu de fibres 10 imprégné d'une résine 12. Ces fibres 10 sont appelées, dans la description, fibres de base du matériau composite.

Sur cette figure 3A, on a représenté, en outre, des fibres supplémentaires 11, appelées aussi fibres spécifiques ou fibres rapportées. Ces fibres spécifiques 11 sont intégrées dans le matériau composite réalisant l'aube 6. Comme on peut le voir sur la figure, ces fibres spécifiques 11 sont en partie introduites dans la résine 12 du matériau composite. En outre, une portion de ces fibres spécifiques 11 est extérieure à l'aube 6, c'est-à-dire qu'elle dépasse de l'aube. La portion de ces fibres 11 qui est hors de l'aube constitue une brosse 9 (ou joint brosse).

Sur la figure 3B, on a représenté un second mode de réalisation du joint brosse 9 de l'aube 6. Selon ce mode de réalisation, la brosse 9 est réalisée, d'une part, au moyen des fibres spécifiques 11 et, d'autre part, au moyen de fibres de renforcement 13. Ces fibres de renforcement 13 sont des fibres constituant le matériau composite, d'une longueur supérieure à celle des fibres de base 10 représentées sur la figure 3A. Ces fibres de renforcement 13 dépassent donc à l'extérieur de l'aube 6 tout comme les fibres spécifiques 11 de façon à densifier la brosse 9 réalisée par ces fibres spécifiques 11.

Sur la figure 3C, on a représenté un troisième mode de réalisation du joint brosse 9 d'une aube 6 en matériau composite. Selon ce mode de réalisation, le joint brosse 9 est réalisé, un pli sur deux, au moyen de fibres spécifiques 11 et de fibres de base 10 et un pli sur deux au moyen de fibres de renforcement 13. Ceci signifie que un "poil" sur deux de la brosse 9 est une fibre de renforcement 13 et un "poil" sur deux de la brosse 9 est une fibre spécifique 11. Dans ce dernier pli, chaque fibre spécifique 11 est alignée avec une fibre de base 10. L'aube 6 est donc réalisée au moyen d'un tissu de fibres incluant à la fois des fibres de base 10 et des fibres de renforcement 13. Un tel mode de réalisation permet d'obtenir un joint brosse 9 plus dense que celui montré sur la figure 3A.

Le procédé pour réaliser de tels joints brosses directement intégrés à l'aube consiste donc :
- à déposer, dans un moule, un tissu de fibres de base 10 et/ou de fibre de renforcement 13 pouvant, par exemple, comporter des plis superposés ou former un tissage multidirectionnel ;
- à déposer dans ce même moule, aux environs de l'extrémité libre de l'aube, des fibres rapportées 11;
- à injecter de la résine dans ce moule pour en imprégner les fibres ;
- à effectuer une polymérisation sous presse chauffante du tissu de fibres ainsi obtenu et pré-imprégné.

On peut alors effectuer un usinage du tissu de fibres imprégné de façon à mettre, à la longueur choisie, les "poils" du joint brosse, c'est-à-dire les fibres spécifiques 11 (ainsi que, dans certains cas, les fibres de renforcement 13) réalisant le joint brosse. Avantageusement, le tissu de fibres imprégné peut être usiné de façon inclinée pour donner à la brosse une certaine inclinaison.

On effectue ensuite une dissolution d'une partie de la résine en trempant le tissu de fibres imprégné et usiné dans un bain acide de façon à ce que, par attaque chimique, la résine se dissolve sur une longueur désirée, ce qui permet ainsi d'obtenir la longueur de poils de brosse choisie.

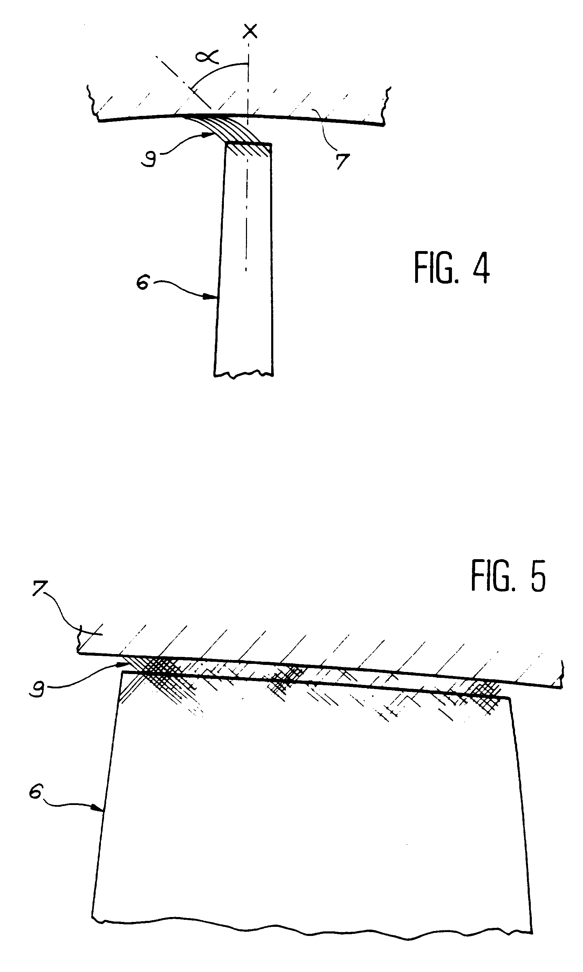

Sur la figure 4, on a représenté, selon une vue de face de la turbomachine, une extrémité libre d'une aube 6 comportant un joint brosse 9 incliné d'un angle α par rapport à l'axe X de l'aube 6. Cet angle α est opposé au sens de rotation de l'aube 6. De cette façon, lorsque l'aube 6 est en rotation, la brosse 9 vient frotter sur la piste du carter 7, ce qui assure une bonne étanchéité, puisque la brosse 9 est en permanence en contact avec la piste 7.

Sur la figure 5, on a représenté, selon une vue en coupe longitudinale de la turbomachine, l'extrémité libre de l'aube 6 avec,en partie, le tissu de fibres réalisant le joint brosse 9. Cette figure 5 montre donc le mode de réalisation dans lequel le tissu de fibres comporte des plis superposés ou bien un tissage multidirectionnel. De façon plus précise, on peut voir sur cette figure 5 que les fibres réalisant, aussi bien le matériau composite de l'aube 6 que le joint brosse 9 peuvent être tissées de façon multidirectionnelle, ce qui réalise un joint brosse 9 de meilleure étanchéité et une aube 6 plus solide.

Le carter 7 et, en général, tous les éléments contre lesquels frottent des joints brosses selon l'invention, sont métalliques ou encore en matériau composite avec une piste métallique à l'endroit où frottent les joints brosse 9, les pistes de frottement au droit des joints brosses devant avoir un bon état de surface polie, de façon à permettre la meilleure étanchéité possible.

Selon un mode de réalisation du joint brosse de l'invention, les fibres rapportées sont des fibres métalliques. Dans ce cas, le carter 7 ou tout élément contre lequel un joint brosse est en contact comporte une piste ayant reçu un dépôt très lisse de carbure de chrome.

Les joints brosses selon l'invention ont pour avantage d'être facilement réparables, ou, plus exactement, d'être facilement remplaçables. Le remplacement d'un joint brosse sur une aube en matériau composite est effectué :
- par dissolution dans un bain acide, de la résine à l'extrémité libre de l'aube ;
- par suppression des éventuelles fibres rapportées et, éventuellement, des fibres de renforcement endommagées ;
- par intégration de fibres rapportées neuves et, éventuellement, de nouvelles fibres de renforcement ;
- par injection d'une nouvelle résine aux environs de l'extrémité libre de l'aube ;
- puis par usinage et par dissolution par attaque chimique, comme pour le procédé de réalisation du joint brosse décrit précédemment.

Les joints brosses selon l'invention ont été décrits, précédemment, dans le cas où ils sont intégrés en extrémité libre d'une aube mobile, c'est-à-dire d'une aube de compresseur ou de soufflante.

Il est cependant évident, pour l'homme du métier, d'intégrer de tels joints brosses sur des aubres fixes telles que celles des redresseurs fixes des compresseurs basse pression ou des premiers étages de compresseurs haute pression.

D'une manière générale, ces joints brosses selon l'invention peuvent être réalisés pour toutes sortes d'éléments fixes ou mobiles, si ces éléments sont réalisés en matériaux composites.

Sur les aubages mobiles, l'utilisation de joints brosses intégrés selon l'invention permet de remplacer le matériau abradable des éléments fixes par une simple piste de frottement, ce qui permet d'alléger sensiblement le carter de la turbomachine. Par exemple, pour un carter de rayon de 1 050 mm, le carter peut être allégé de 10,7 kg.

L'utilisation de ces joints brosses dans des aubages mobiles permet en outre de supprimer la phase de rôdage qui était nécessaire pour des joints en matériaux abradables. De plus, ces joints brosses assurent une étanchéité pour tous les régimes moteurs, puisque le joint est "élastique" de par l'inclinaison des poils de la brosse.

Sur des redresseurs fixes, l'utilisation de joints brosses permet un montage de redresseurs en porte-à-faux, au lieu de redresseurs guidés en extrémité.

L'utilisation de tels joints brosses permet en outre un gain de masse important et une simplification du rotor de compression. En outre, l'utilisation de ces joints brosses en remplacement d'un labyrinthe inter-aubes, permet de supprimer le support d'abradable, ainsi que le dispositif d'étanchéité par léchettes, généralement utilisé.

D'une façon générale, quel que soit le type d'aubes sur lesquelles ces joints brosses sont montés, leur utilisation permet de simplifier la réalisation de l'aube et de permettre une réparation, ou simplement un changement facile, de ces joints brosses.

## Revendications

1. Aube de turbomachine en matériau composite réalisée au moyen d'un tissu de fibres multidirectionnelles (10, 13) imprégné d'une résine (12), et comprenant un corps d'aube (6), caractérisée en ce qu'elle comporte, à l'extrémité libre du corps d'aube, un joint d'étanchéité (9) intégré dans la résine.

2. Aube de turbomachine selon la revendication 1, caractérisée en ce que le joint d'étanchéité comprend une pluralité de fibres spécifiques (11) qui sont en partie intégrées dans la résine et en partie extérieures au corps d'aube pour former une brosse.

3. Aube de turbomachine selon la revendication 2, caractérisée en ce que les fibres spécifiques sont intégrées dans la résine avec un angle a opposé au sens de rotation de la turbomachine.

4. Aube de turbomachine selon la revendication 2 ou 3, caractérisée en ce que, aux environs de l'extrémité libre du corps d'aube, une portion du tissu de fibres n'est pas recouvert de résine de façon à former, avec les fibres spécifiques, une brosse plus dense.

5. Aube de turbomachine selon l'une quelconque des revendications 2 à 4, caractérisée en ce que les fibres spécifiques sont métalliques.

6. Procédé de réalisation d'une aube de turbomachine (6) en matériau composite comportant un joint d'étanchéité (9), caractérisé en ce qu'il consiste à :
- introduire dans un moule, un tissu de fibres (10, 13) ;
- introduire dans le moule, aux environs de l'extrémité libre de l'aube, des fibres spécifiques (11) ;
- injecter une résine (12) dans ce moule ;
- effectuer une polymérisation sous presse chauffante du tissu de fibres imbibé de résine.
- dissoudre, par attaque chimique dans un bain acide, de la résine pour obtenir une longueur de brosse choisie, à l'extrémité libre de l'aube, au niveau desdites fibres spécifiques (11).

7. Procédé selon la revendication 6, caractérisé en ce qu'il consiste en outre à ajuster la longueur des fibres par usinage.

## Claims

1. A composite turbomachine blade made of a fabric of multidirectional fibres (10, 13) impregnated with a resin (12) and comprising a blade body (6),
characterised in that it comprises at the free end of the blade body a seal (9) incorporated in the resin.

2. A blade according to claim 1, characterised in that the seal comprises a number of specific fibres (11) which are partly incorporated in the resin and which partly extend outside the blade body to form a brush.

3. A blade according to claim 2, characterised in that the specific fibres are incorporated in the resin at an angle α opposite to the direction of rotation of the turbomachine.

4. A blade according to claim 2 or claim 3,
characterised in that near the free end of the blade body some of the fibre fabric is left free from resin so as to form a denser brush with the specific fibres.

5. A blade according to any one of claims 2 to 4.
characterised in that the specific fibres are metallic.

6. A process for making a composite turbomachine blade comprising a seal (9), characterised in that it consists of:
introducing a fibre fabric (10, 13) into a mould;
introducing specific fibres (11) into the mould near the free end of the blade;
injecting a resin (12) into the mould;
polymerising the resin-impregnated fibre fabric in a heating press, and
dissolving resin by chemical attack in an acid bath to obtain a required brush length of the specific fibres (11) at the free end of the blade.

7. A process according to claim 6, characterised in that it also comprises adjusting fibre length by machining.

## Patentansprüche

1. Turbomaschinenschaufel aus einem Verbundwerkstoff, die mittels eines harzgetränkten Gewebes aus in mehreren Richtungen verlaufenden Fasern (10, 13) hergestellt ist und einen Schaufelkörper (6) aufweist,
**dadurch gekennzeichnet,**
daß sie an dem freien Ende des Schaufelkörpers eine in das Harz integrierte Dichtung (9) aufweist.

2. Turbomaschinenschaufel nach Anspruch 1, dadurch gekennzeichnet, daß die Dichtung eine Anzahl spezifischer Fasern (11) umfaßt, die zum Teil in das Harz integriert sind und zum Teil außerhalb des Schaufelkörpers liegen, um eine Bürste zu bilden.

3. Turbomaschinenschaufel nach Anspruch 2, dadurch gekennzeichnet, daß die spezifischen Fasern unter einem der Drehrichtung der Turbomaschine entgegengesetzten Winkel a in das Harz integriert sind.

4. Turbomaschinenschaufel nach Anspruch 2 oder 3, dadurch gekennzeichnet, daß im Bereich des freien Endes des Schaufelkörpers ein Teil des Fasergewebes nicht mit Harz bedeckt ist, so daß es mit den spezifischen Fasern eine dichtere Bürste bilden.

5. Turbomaschinenschaufel nach einem der Ansprüche 2 bis 4, dadurch gekennzeichnet, daß die spezifischen Fasern aus Metall bestehen.

6. Verfahren zur Herstellung einer Turbomaschinenschaufel (6) aus einem Verbundwerkstoff, die eine Dichtung (9) aufweist,
**gekennzeichnet durch** die Verfahrensschritte:
- Einbringen eines Fasergewebes (10, 13) in eine Form,
- Einbringen von spezifischen Fasern (11) in die Form im Bereich des freien Endes des Schaufelkörpers,
- Einspritzen eines Harzes (12) in die Form,
- Durchführen einer Polymerisation des harzgetränkten Fasergewebes unter einer Heiz-presse,
- Auflösen des Harzes durch einen chemischen Angriff in einem Säurebad an dem freien Ende der Schaufel in Höhe der spezifischen Fasern (11), um eine gewünschte Bürstenlänge zu erhalten.

7. Verfahren nach Anspruch 6, gekennzeichnet durch den weiteren Verfahrensschritt, daß die Länge der Fasern durch materialabtragende Bearbeitung eingestellt wird.
